# EUROPÄISCHE PATENTSCHRIFT

(11) **EP 3 918 297 B1**
(45) Veröffentlichungstag und Bekanntmachung des Hinweises auf die Patenterteilung: **20.12.2023**
(21) Anmeldenummer: 20700615.6
(22) Anmeldetag: 20.01.2020
(51) Int. Cl.: G01M 5/00, B61K 9/10, B61L 1/06, G01L 1/16, G01L 5/00

(54) **VORRICHTUNG ZUR ERFASSUNG EINER SCHIENENBELASTUNG UND VERFAHREN ZUR MONTAGE EINER SOLCHEN VORRICHTUNG IN EINER SCHIENE**
DEVICE FOR DETECTING A RAIL LOAD AND METHOD FOR MOUNTING SUCH A DEVICE IN A RAIL
DISPOSITIF DE DÉTECTION D'UNE CHARGE DE RAIL ET PROCÉDÉ DE MONTAGE POUR RECHERCHER UN DISPOSITIF DANS UN RAIL

(30) Priorität: 28.01.2019 EP 19153963
(43) Veröffentlichungstag der Anmeldung: 08.12.2021
(73) Patentinhaber: Kistler Holding AG, 8408 Winterthur (CH)
(72) Erfinder: PFLUGER, Kim, 8404 Winterthur (CH)
(86) Internationale Anmeldenummer: PCT/EP2020/051209
(87) Internationale Veröffentlichungsnummer: WO 2020/156845

(56) Entgegenhaltungen:
- EP-A1- 0 491 655
- DE-A1- 4 408 923
- US-A1- 2017 160 153
- US-A1- 2017 315 013

## Beschreibung

### Technisches Gebiet

Die Erfindung betrifft allgemein das technische Gebiet von Schienenfahrzeugen und im Speziellen eine Vorrichtung zur Erfassung einer Schienenbelastung durch ein Schienenfahrzeug gemäss dem Oberbegriff des unabhängigen Vorrichtungsanspruchs. Die Erfindung betrifft auch ein Verfahren zur Montage einer solchen Vorrichtung in einer Schiene gemäss dem Oberbegriff des unabhängigen Verfahrensanspruchs.

### Stand der Technik

Schienenfahrzeuge fahren auf Schienen. Verbreitet sind Schienenfahrzeuge, die mit Rädern auf paarweise und parallel angeordneten Schienen aus Stahl fahren. Die Schienenfahrzeuge und die Schienen müssen Sicherheitsrichtlinien genügen. Aus diesem Grund wird eine Schienenbelastung erfasst, um so eine Abnutzung der Räder festzustellen. Abgenutzte Räder weisen Radunrundheiten und Radabflachungen auf. Abgenutzte Räder verursachen im Vergleich zu nichtabgenutzten Rädern eine grössere Schienenbelastung. Die Schienenbelastung weist eine statische Komponente, wie eine Radaufstandskraft und eine dynamische Komponente, wie eine Radführungskraft auf.

Dazu zeigt die Schrift DE19518123C2 einen Belastungssensor, um die Schienenbelastung zu erfassen. Der Belastungssensor ist in eine Bohrung einer Schiene eingepasst. Die Bohrung ist eine Querbohrung. Der Belastungssensor weist ein Innenrohr und ein dazu koaxiales Aussenrohr auf. Das Aussenrohr ist in zwei Halbschalen geteilt. Eine Glasfaser ist zwischen dem Innenrohr und den Halbschalen in einer elastischen Masse gelagert. Die Glasfaser überträgt Licht. Ohne Schienenbelastung berühren sich die Halbschalen nicht. Bei Schienenbelastung durch das Schienenfahrzeug deformiert sich die elastische Masse und die Halbschalen bewegen sich aufeinander zu und ändern einen Krümmungsradius der Glasfaser, woraus sich eine Dämpfung der Lichtübertragung in der Glasfaser ergibt. Die Dämpfung der Lichtübertragung in der Glasfaser wird als Belastungssignal erfasst und ausgewertet. Das Belastungssignal ist ein Mass für die Schienenbelastung.

Nachteilig am Belastungssensor der Schrift DE19518123C2 ist die ausgeprägte Temperaturabhängigkeit der Elastizität der elastischen Masse. Eine Einsatztemperatur von Schienen schwankt in einem Bereich von -40 °C bis +70 °C. Das Deformationsverhalten der elastischen Masse wird stark von der Einsatztemperatur beeinflusst. Auch altert die elastische Masse im Vergleich mit den anderen Bestandteilen des Belastungssensors wie der Glasfaser, dem Innenrohr und den Halbschalen zeitlich rascher, welche Alterung das Deformationsverhalten der elastischen Masse verändert. Die Temperaturabhängigkeit und die Alterung der elastischen Masse führen zu einer Ungenauigkeit bei der Erfassung der Schienenbelastung.

Zudem ist die Lehre der Schrift DE19518123C2 auf eine Schienenbelastung in der Grössenordnung von 2 kN ausgelegt, was den heutigen Anforderungen nicht mehr entspricht, denn gerade Schienenfahrzeuge, die mit hohen Geschwindigkeifahren, verursachen eine Schienenbelastung in der Grössenordnung von bis zu 250 kN.

Die Schrift DE4408923A1 zeigt einen Radsensor für Gleise, der in eine Querbohrung eines Schienenstücks eingepasst wird. Der Radsensor weist einen hohlzylinderförmigen Verformungskörper auf, an dem Dehnungsmessstreifen (DMS) angebracht sind, welche die Schienenbelastung erfassen.

Des Weiteren ist es allgemeiner Wunsch, einen Belastungssensor auf den Markt zu bringen, dessen Lebensdauer derjenigen einer Schiene von mindestens zehn Jahren entspricht. Denn ein solcher Belastungssensor muss so während der Lebensdauer der Schiene nicht ersetzt werden. Dies schliesst die Verwendung von DMS aus, welche mittels Kleber auf einem Träger befestigt werden und eine Verformung des Trägers als Änderung eines elektrischen Widerstands erfassen. Auch solche Kleber haben nicht die Lebensdauer einer Schiene von mindestens zehn Jahren.

Auch soll die dynamische Komponente der Schienenbelastung mit einer grossen zeitlichen Auflösung von bis zu 100 kHz erfasst werden.

Die Schrift US2017/160153A1 bezieht sich auf einen piezoelektrischen Drucksensor zum Messen des Zylinderdrucks in einem Verbrennungsmotor. Der Drucksensor weist ein Gehäuse mit einer dünnen Membran auf. Piezoelektrisches Kristallmaterial ist im Gehäuse hinter der Membran angeordnet. Mit der Membran ragt der Drucksensor in den Verbrennungsmotor. Der Zylinderdruck wirkt als Kraft über die Membran auf das piezoelektrische Kristallmaterial. Unter der Wirkung der Kraft werden auf Oberflächen des piezoelektrischen Materials elektrische Polarisationsladungen erzeugt.

Auch die Schrift US2017/315013A1 bezieht sich auf einen piezoelektrischen Drucksensor zum Messen des Zylinderdrucks in einem Verbrennungsmotor.

Ein weiterer piezoelektrischer Lastsensor ist aus EP0491655A1 bekannt.

Und dann wird darüber hinaus auch gewünscht, den Belastungssensor kostengünstig an der Schiene zu montieren.

Eine erste Aufgabe der vorliegenden Erfindung ist es, eine Vorrichtung zur Erfassung einer Schienenbelastung durch ein Schienenfahrzeug aufzuzeigen, welche Vorrichtung die Schienenbelastung mit hoher Genauigkeit erfasst. Eine zweite Aufgabe der Erfindung besteht darin, eine Vorrichtung anzugeben, welche für die Erfassung einer grossen Schienenbelastung ausgelegt ist. Die Erfindung stellt sich als dritte Aufgabe, die Bereitstellung einer solchen Vorrichtung, deren Lebensdauer derjenigen der Schiene entspricht. Eine vierte Aufgabe der Erfindung besteht darin, eine statische - und eine dynamische Komponente der Schienenbelastung mit einer grossen zeitlichen Auflösung zu erfassen. Und als fünfte Aufgabe soll die Vorrichtung kostengünstig an der Schiene montierbar sein.

### Darstellung der Erfindung

Zumindest eine dieser Aufgaben wird durch die Merkmale der unabhängigen Ansprüche 1 und 7 gelöst.

Die Erfindung betrifft eine Vorrichtung zur Erfassung einer Schienenbelastung; welche Vorrichtung in eine Bohrung einer Schiene einpassbar ist; auf welcher Schiene Schienenfahrzeuge mit Rädern fahren, welche Räder die Schiene belasten; welche Vorrichtung einen Sensor aufweist, welcher Sensor unter einer Wirkung der Schienenbelastung ein Belastungssignal erzeugt, welches Belastungssignal ein Mass für die Schienenbelastung ist; und welcher Sensor mindestens ein piezoelektrisches Sensorelement aufweist, welches piezoelektrische Sensorelement elektrische Polarisationsladungen als Belastungssignal erzeugt.

Es hat sich gezeigt, dass das piezoelektrische Sensorelement eine Schienenbelastung, welche als Kraft, Moment oder Beschleunigung auf die Schiene wirkt, mit hoher Genauigkeit erfassen kann. Denn unter der Wirkung der Schienenbelastung erzeugt das piezoelektrische Sensorelement elektrische Polarisationsladungen. Und eine Menge der erzeugten elektrischen Polarisationsladungen ist proportional zur Schienenbelastung. Diese Proportionalität der Menge der erzeugten elektrischen Polarisationsladungen zur Schienenbelastung B ist über den gesamten Bereich von -40 °C bis +70 °C der Einsatztemperatur der Schiene sehr konstant und fast nicht temperaturabhängig. Zudem ist das piezoelektrische Material mechanisch sehr stabil und unterliegt während einer Lebensdauer der Schiene von mindestens zehn Jahren praktisch keiner Alterung. Auch erfasst das piezoelektrische Sensorelement die dynamische Komponente der Schienenbelastung mit einer grossen zeitlichen Auflösung von bis zu 100 kHz.

Die Erfindung betrifft auch ein Verfahren zur Montage der Vorrichtung zur Erfassung einer Schienenbelastung in einer Schiene, wobei in der Schiene eine Bohrung mit einem Bohrungsradius angefertigt wird; wobei eine Vorrichtung mit einem Sensorgehäuse verwendet wird, in welchem Sensorgehäuse mindestens ein piezoelektrisches Sensorelement angeordnet ist, welches piezoelektrische Sensorelement unter einer Wirkung der Schienenbelastung elektrische Polarisationsladungen als Belastungssignal erzeugt, welches Sensorgehäuse von einer Mantelfläche begrenzt ist, welche Mantelfläche im Vergleich mit dem Bohrungsradius in mindestens einem Umfangbereich Übermass aufweist; und wobei die Vorrichtung mit dem Übermass im Umfangbereich form- und kraftschlüssig in die Bohrung eingepasst wird.

Eine solche Montage ist kostengünstig durchführbar. Auch wenn die Schiene bereits in einem Schienennetz verbaut ist, kann in der Schiene eine Bohrung mit einem Bohrungsradius mit bekanntem und allgemein verfügbarem Werkzeug einfach und rasch angefertigt werden. Und auch die form- und kraftschlüssige Einpassung der Vorrichtung mit Übermass im Umfangbereich der Mantelfläche in die Bohrung kann mit bekanntem und allgemein verfügbarem Werkzeug einfach und rasch vorgenommen werden.

### Kurze Beschreibung der Zeichnungen

Im Folgenden wird die Erfindung beispielhaft unter Beizug der Figuren näher erklärt. Es zeigen
- Fig. 1: eine Schnittdarstellung durch einen Teil einer Ausführungsform einer Schiene mit einer Bohrung für eine Vorrichtung zur Erfassung einer Schienenbelastung;
- Fig. 2: eine Schnittdarstellung durch einen Teil einer Ausführungsform der Vorrichtung zur Erfassung der Schienenbelastung vor einer Montage in die Bohrung der Schiene gemäss Fig. 1; und
- Fig. 3: eine Schnittdarstellung durch den Teil der Ausführungsform der Vorrichtung gemäss Fig. 2 nach der Montage in die Bohrung der Schiene gemäss Fig. 1.

### Wege zur Ausführung der Erfindung

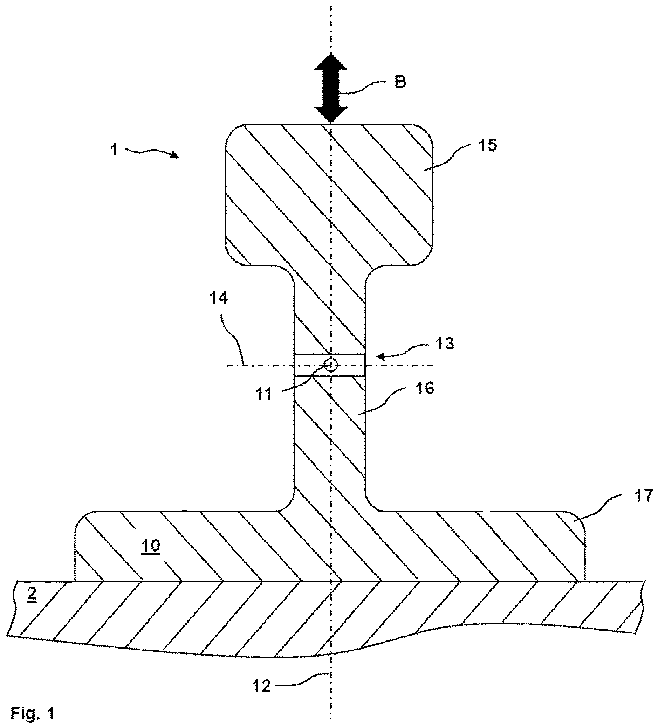

Fig. 1 zeigt in einer Schnittdarstellung einen Teil einer Ausführungsform einer Schiene 1. Die Schiene 1 weist einen Schienenkörper 10 aus mechanisch beständigem Material wie Eisen, Eisenlegierungen, Stahl, usw. auf. Der Schienenkörper 10 ist einstückig. Die Schiene 1 weist entlang einer Längsachse 11 eine Länge von mehreren Metern auf. Die Schiene 1 weist entlang einer Vertikalachse 12 eine Höhe von mehreren Zentimetern auf. Die Schiene 1 weist entlang einer Querachse 14 eine Breite von mehreren Zentimetern auf. Die drei Achsen Längsachse 11, Vertikalachse 12 und Querachse 14 stehen senkrecht aufeinander. Längsachse 11 und Querachse 14 bilden eine horizontale Ebene. Längsachse 11 und Vertikalachse 12 bilden eine vertikale Ebene. Die Schiene 1 weist einen Kopf 15, einen Steg 16 und einen Fuss 17 auf. Mit dem Fuss 17 ist die Schiene 1 auf einer Schwelle 2 mechanisch befestigt. Der Steg 16 verbindet entlang der Vertikalachse 12 Kopf 15 und Fuss 17 der Schiene 1 mechanisch miteinander. Entlang der Querachse 14 ist eine Breite des Stegs 16 schmaler als eine Breite von Kopf 15 oder Fuss 17. Bei Kenntnis der vorliegenden Erfindung kann der Fachmann auch andere Ausführungsformen einer Schiene realisieren. So können Kopf, Steg und Fuss der Schiene im Verhältnis zueinander anders dimensioniert sein. Auch können Länge, Breite und Höhe der Schiene kleiner oder grösser sein.

Die Schiene 1 ist in einem Schienennetz verbaut. Im Schienennetz fahren Schienenfahrzeuge. Die Schienenfahrzeuge sind figürlich nicht dargestellt. Bei den Schienenfahrzeugen kann es sich um eine Eisenbahn, eine Strassenbahn, eine Untergrundbahn, usw. handeln. Die Schienenfahrzeuge fahren mit Rädern auf der Schiene 1. Auch die Räder sind figürlich nicht dargestellt. Die Räder wirken mit einer Schienenbelastung B auf den Kopf 15 der Schiene 1. Die Schienenbelastung B ist figürlich als Doppelpfeil dargestellt. Bei der Schienenbelastung B kann es sich um Kräfte, Momente und Beschleunigungen (Schwingungen) handeln. Die Schienenbelastung B weist eine statische Komponente und eine dynamische Komponente auf. Die statische Komponente kann eine Radaufstandskraft (Gewicht) der Schienenfahrzeuge sein. Die Radaufstandskraft wirkt entlang der Vertikalachse 12 der Schiene 1. Die dynamische Komponente kann eine Radführungskraft der Schienenfahrzeuge sein. Die Radführungskraft wirkt entlang der Vertikalachse 12 und sie wirkt in der horizontalen Ebene.

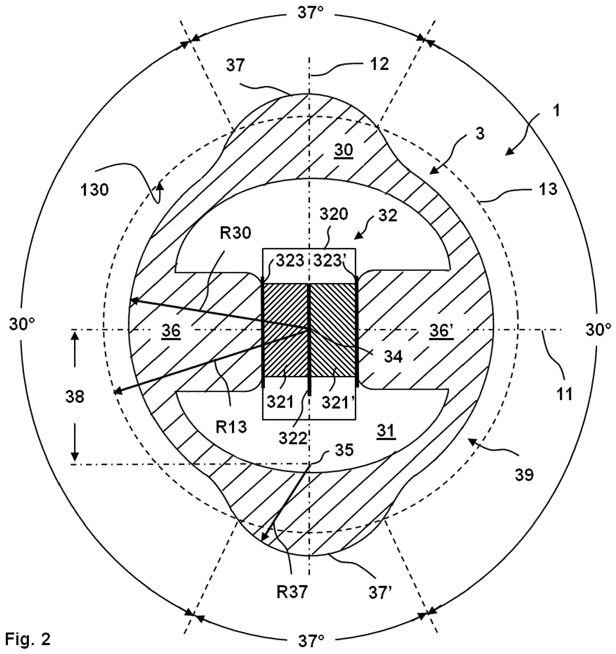

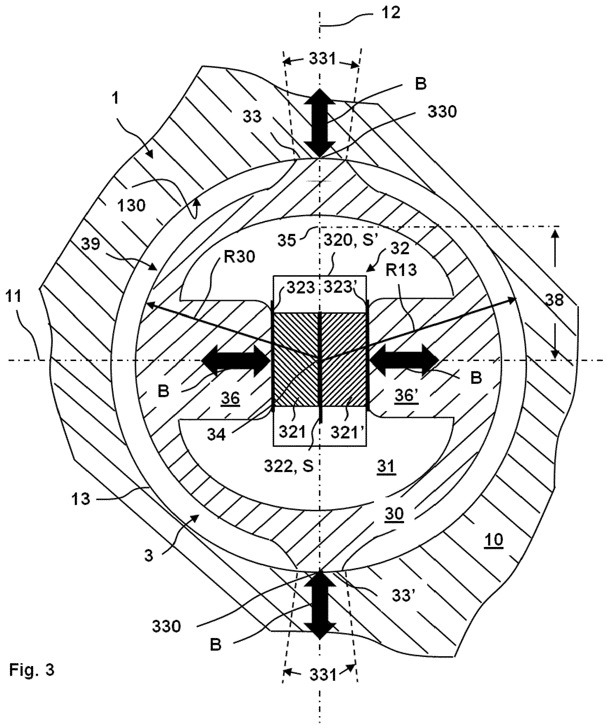

Die Schiene 1 weist eine Bohrung 13 auf. Die Bohrung 13 kann im Steg 16 der Schiene 1 angebracht sein. Vorzugsweise ist die Bohrung 13 in einer neutralen Faser der Schiene 1 angeordnet. In der neutralen Faser verursacht die Schienenbelastung B keine Änderung der Länge der Schiene 1 entlang der Längsachse 11. In der neutralen Faser verformt sich die Scheine 1 also nicht unter der Schienenbelastung B. In der neutralen Faser nimmt die Schiene 1 daher auch keinen Teil der Schienenbelastung B auf, was die Erfassung der Schienebelastung B verfälschen würde. Die Bohrung 13 kann eine Querbohrung entlang der Querachse 14 sein. Die Bohrung 13 kann ein Sackloch oder ein Durchgangsloch sein. Die Bohrung 13 kann kreiszylinderförmig sein und entlang der Querachse 14 eine Länge von 15 Millimetern und senkrecht zur Querachse 14 einen Bohrungsradius R13 von 12.50 Millimetern aufweisen. Der Bohrungsradius R13 ist in den Fig. 2 und 3 dargestellt. Der Bohrungsradius R13 ist ein Innenradius. Der Bohrungsradius R13 begrenzt eine innere Oberfläche 130 der Bohrung 13. Vorzugsweise ist die Bohrung 13 mit einer Toleranz von 0.08 Millimetern gefertigt. Eine Bohrung 13 mit solch einer Toleranz ist an einer bereits im Schienennetz verbauten Schiene 1 kostengünstig und mit bekanntem und allgemein verfügbarem Werkzeug einfach und rasch anfertigbar.

Bei Kenntnis der vorliegenden Erfindung kann der Fachmann die Bohrung auch im Kopf oder im Fuss der Schiene realisieren. Auch kann der Fachmann eine Bohrung mit kleinerer oder grösserer Länge, oder auch mit kleinerem oder grösserem Bohrungsradius realisieren.

In die Bohrung 13 ist eine erfindungsgemässe Vorrichtung 3 zur Erfassung der Schienenbelastung B einpassbar. Eine Ausführungsform der Vorrichtung 3 ist in den Fig. 2 und 3 dargestellt. Die Vorrichtung 3 weist ein Sensorgehäuse 30 auf. Das Sensorgehäuse 30 ist aus mechanisch beständigem Material wie Reinmetallen, Nickellegierungen, Kobaltlegierungen, Eisenlegierungen, usw.

Das Sensorgehäuse 30 ist hohlzylinderförmig und weist einen Mittelpunkt 34, eine Höhe und eine Mantelfläche 39 auf. Die Mantelfläche 39 verläuft in der vertikalen Ebene in einer Umfangsrichtung. Die Mantelfläche 39 ist eine äussere Oberfläche des Sensorgehäuses 30. Entlang der Querachse 14 kann das Sensorgehäuse 30 eine Höhe von weitgehend 15 Millimeter haben. Entlang der Vertikalachse 12 weist das Sensorgehäuse 30 eine andere Ausdehnung als entlang der Längsachse 11 auf. Entlang der Vertikalachse 12 ist eine Ausdehnung des Sensorgehäuses 30 im Vergleich zur Ausdehnung entlang der Längsachse 11 grösser. Bei Kenntnis der vorliegenden Erfindung kann der Fachmann ein Sensorgehäuse mit kleinerer oder grösserer Höhe, oder auch mit kleinerer oder grösserer Differenz der Ausdehnung realisieren.

Entlang der Vertikalachse 12 weist das Sensorgehäuse 30 zwei Wölbungen 37, 37' auf. Vorzugsweise weist die Mantelfläche 39 entlang der Vertikalachse 12 einen Wölbungsradius R37 von weitgehend weniger als der Hälfte des Bohrungsradius R13 auf. Der Wölbungsradius R37 kann weitgehend 6.0 Millimetern betragen. Der Wölbungsradius R37 wird von einem Versatzpunkt 35 aus gemessen. Der Versatzpunkt 35 ist zum Mittelpunkt 34 entlang der Vertikalachse 12 um eine Distanz 38 versetzt. Vorzugsweise beträgt die Distanz 38 weitgehend mehr als die Hälfte des Bohrungsradius R13. Die Distanz 38 kann weitgehend 6.6 Millimetern betragen. Entlang der Vertikalachse 12 begrenzt der Wölbungsradius R37 die Mantelfläche 39. Entlang der Vertikalachse 12 weist das Sensorgehäuse 30 somit eine grössere Ausdehnung auf, welche gleich der Summe aus Wölbungsradius R37 und Distanz 38 ist. Vorzugsweise beträgt ein Umfangsbereich 37° der Mantelfläche 39 mit grösserer Ausdehnung weitgehend 30°. Der Umfangsbereich 37° der Mantelfläche 39 mit grösserer Ausdehnung setzt sich aus zwei Teilumfangsbereichen von jeweils weitgehend 15° bei den beiden Wölbungen 37, 37' zusammen.

Entlang der Längsachse 11 weist das Sensorgehäuse 30 eine kleinere Ausdehnung auf, welche gleich einem zweifachen Gehäuseradius R30 ist. Vorzugsweise beträgt die Gehäuseradius R30 weitgehend weniger als der Bohrungsradius R13. Der Gehäuseradius R30 weitgehend 11.0 Millimetern betragen. Der Gehäuseradius R30 wird vom Mittelpunkt 34 aus gemessen. Entlang der Längsachse 11 begrenzt der Gehäuseradius R30 die Mantelfläche 39. Vorzugsweise beträgt ein Umfangsbereich 30° der Mantelfläche 39 mit kleinerer Ausdehnung weitgehend 330°. Der Umfangsbereich 30° der Mantelfläche 39 mit kleinerer Ausdehnung setzt sich aus zwei Teilumfangsbereichen von jeweils weitgehend 165° zwischen den beiden Wölbungen 37, 37' zusammen.

In Übergangsbereichen geht die Mantelfläche 39 kontinuierlich von der grösseren Ausdehnung entlang der Vertikalachse 12 in die kleinere Ausdehnung entlang der Längsachse 11 über.

Wie in Fig. 2 dargestellt, ist der Gehäuseradius R30 kleiner als der Bohrungsradius R13, während die Summe aus Wölbungsradius R37 und Distanz 38 grösser als der Bohrungsradius R13 ist. Im Umfangsbereich 37° der Mantelfläche 39 mit grösserer Ausdehnung weist das Sensorgehäuse 30 im Vergleich zum Bohrungsradius R13 ein Übermass auf, während das Sensorgehäuse 30 im Umfangsbereich 30° der Mantelfläche 39 mit kleinerer Ausdehnung im Vergleich zum Bohrungsradius R13 ein Untermass aufweist.

Wie in Fig. 3 dargestellt, wird die Vorrichtung 3 in die Bohrung 13 form- und kraftschlüssig eingepasst, indem das Übermass im Umfangsbereich 37° der Mantelfläche 39 mit grösserer Ausdehnung verformt und verdrängt wird. Die Tatsache, dass der Wölbungsradius R37 weitgehend weniger als die Hälfte des Bohrungsradius R13 beträgt und dass sich der Umfangsbereich 37° der Mantelfläche 39 mit grösserer Ausdehnung über weitgehend zweimal 15° erstreckt, führt zu einem materialgerecht dimensionierten Übermass. Denn bei einem grösseren Wölbungsradius, insbesondere bei einem grösseren Wölbungsradius der weitgehend gleich gross wie der Bohrungsradius ist, weist das Übermass zu viel Material auf. Auch bei einem Umfangsbereich 37° der Mantelfläche 39 mit grösserer Ausdehnung von deutlich mehr als zweimal 15° weist das Übermass zuviel Material auf. Das materialgerecht dimensionierte Übermass ist mit bekanntem und allgemein verfügbarem Werkzeug einfach und rasch verformbar und verdrängbar.

Erfindungsgemäß wird die Vorrichtung 3 im Umfangsbereich 37° der Mantelfläche 39 mit grösserer Ausdehnung über zwei form- und kraftschlüssige Verbindungen 33, 33' in die Bohrung 13 eingepasst. Nach der Einpassung sind das Sensorgehäuse 30 und der Schienenkörper 10 über zwei form- und kraftschlüssige Verbindungen 33, 33' miteinander mechanisch verbunden.

Für ein unendlich steifes Sensorgehäuse 30 und einen unendlich steifen Schienenkörper 10 bildet jede der zwei form- und kraftschlüssigen Verbindungen 33, 33'einen Linienkontakt 330. Der Linienkontakt 330 liegt auf der auf der Vertikalachse 12 und erstreckt sich entlang der Querachse 14.

In Realität weisen die Materialen von Sensorgehäuse 30 und Schienenkörper 10 jedoch eine endliche Steifigkeit auf. Für ein endlich steifes Sensorgehäuse 30 und einen endlich steifen Schienenkörper 10 bildet jede der zwei form- und kraftschlüssigen Verbindungen 33, 33' einen Flächenkontakt 331. Der Flächenkontakt 331 erstreckt sich zwischen der Mantelfläche 39 und der inneren Oberfläche 130 der Bohrung 13. Der Flächenkontakt 331 entlang der Querachse 14. In Umfangsrichtung der Mantelfläche 39 erstreckt sich der Flächenkontakt 331 über einen Umfangsbereich von 1° bis 5°. Bei einem Bohrungsradius R13 von 12.50 Millimeter erstreckt sich der Flächenkontakt 331 in Umfangsrichtung der Mantelfläche 331 über eine Umfangslänge von 0.2 Millimeter bis 1.0 Millimeter. Im Flächenkontakt 331 weisen das Sensorgehäuse 30 und der Schienenkörper 10 eine Kontaktsteifigkeit auf. Unter der Wirkung der Schienenbelastung B ist die Kontaktsteifigkeit definiert gleichmässig. Die definiert gleichmässige Kontaktsteifigkeit gewährleistet, dass die Schienenbelastung B in einem weiten Bereich von 100 N bis 250 kN mit hoher Genauigkeit, d.h. mit einer gleichen Proportionalität übertragen wird.

Im Sensorgehäuse 30 weist die Vorrichtung 3 einen Hohlraum 31 auf. Im Hohlraum 31 ist ein Sensor 32 angeordnet. Der Sensor 32 weist ein Sensorelementgehäuse 320, mindestens ein piezoelektrisches Sensorelement 321, 321' und mindestens eine Elektrode 322 auf.

Der Sensor 32 wird von zwei Stempeln 36, 36' gehalten. Die Stempel 36, 36' sind einstückig mit dem Sensorgehäuse 30. Die Stempel 36, 36' ragen entlang der Vertikalachse 12 gegen den Mittelpunkt 34. Jeder Stempel 36, 36' endet in einer Stirnfläche. Der Sensor 32 wird von den Stirnflächen am Mittelpunkt 34 in der horizontalen Ebene gehalten.

Das Sensorelementgehäuse 320 ist aus mechanisch beständigem Material wie Reinmetallen, Nickellegierungen, Kobaltlegierungen, Eisenlegierungen, usw. Das Sensorelementgehäuse 320 ist weitgehend hohlzylinderförmig. Ein Mittelpunkt des Sensorelementgehäuses 320 ist identisch mit dem Mittelpunkt 34 des Sensorgehäuses 30. Das Sensorelementgehäuse 320 schliesst das piezoelektrische Sensorelement 321, 321' und die Elektrode 322 hermetisch dicht ein. Das Sensorelementgehäuse 320 schützt das piezoelektrische Sensorelement 321, 321' und die Elektrode 322 vor die Erfassung der Schienenbelastung B störenden Einflüssen wie Wasser, Öl, elektromagnetischer Strahlung, usw. Bei Kenntnis der Erfindung kann der Fachmann den Sensor auch ohne Sensorelementgehäuse realisieren, in dieser figürlich nicht dargestellten Ausführungsform werden dann das piezoelektrische Sensorelement 321, 321' und die Elektrode 322 von den Stempeln 36, 36' gehalten.

Das Sensorelementgehäuse 320 kann gegenüber dem Sensorgehäuse 30 elektrisch isoliert sein. Vorzugsweise ist das Sensorelementgehäuse 320 gegenüber dem Sensorgehäuse 30 durch eine Isolationsschicht 323, 323' elektrisch isoliert. Die Isolationsschicht 323, 323' kann aussenseitig auf dem Sensorelementgehäuse 320 aufgebracht sein. Die Isolationsschicht 323, 323` besteht aus elektrisch isolierendem und mechanisch steifem Material wie Keramik, Al₂O₃-Keramik, Saphir, usw. Dadurch, dass das Sensorelementgehäuse 320 gegenüber dem Sensorgehäuse 30 und der Schiene 1 elektrisch isoliert ist, erfolgt die Erfassung der Schienenbelastung B unabhängig von einem Massepotenzial der Schiene 1. Insbesondere können so von der Schiene 1 keine elektrischen Ströme zu den unter der Wirkung der Schienenbelastung B vom piezoelektrischen Sensorelement erzeugten elektrische Polarisationsladungen fliessen und die Erfassung der Schienenbelastung B stören.

Das piezoelektrische Sensorelement 321, 321' ist zylinderförmig und besteht aus piezoelektrischem Material wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw. Das piezoelektrische Sensorelement 321, 321' ist kristallographisch so orientiert geschnitten, dass es eine hohe Empfindlichkeit für die zu erfassende Schienenbelastung B hat. Die Empfindlichkeit ist das Verhältnis von Stärke eines vom piezoelektrischen Sensorelement 321, 321' erzeugten Belastungssignals S, S' zur Grösse der wirkenden Schienenbelastung B. Eine Menge der erzeugten elektrischen Polarisationsladungen ist proportional zur Schienenbelastung B. Oberflächen des piezoelektrischen Sensorelements 321, 321' sind in der horizontalen Ebene im elektrischen Kontakt mit Oberflächen der Elektrode 322 und des Sensorelementgehäuses 320. Auf den Oberflächen des piezoelektrischen Sensorelements 321, 321' erzeugte elektrische Polarisationsladungen werden von der Elektrode 322 und vom Sensorelementgehäuse 320 als Belastungssignal S, S' abgegriffen. Vorzugsweise werden negative elektrische Polarisationsladungen als erstes Belastungssignal S von der Elektrode 322 abgegriffen, während positive elektrische Polarisationsladungen als zweites Belastungssignal S' vom Sensorelementgehäuse 320 abgegriffen werden. Die dynamische Komponente der Schienenbelastung B wird als Belastungssignal S, S' mit einer grossen zeitlichen Auflösung von bis zu 100 kHz erfasst.

Das piezoelektrische Material kann für den piezoelektrischen Longitudinaleffekt so orientiert in Scheiben geschnitten sein, dass unter der Wirkung der zu erfassenden Schienenbelastung B auf in der horizontalen Ebene liegende Oberflächen des piezoelektrischen Sensorelements 321, 321' elektrische Polarisationsladungen auf diesen Oberflächen erzeugt werden. Das piezoelektrische Material kann aber auch für den piezoelektrischen Schereffekt so orientiert in Scheiben geschnitten sein, dass unter der Wirkung der zu erfassenden Schienenbelastung B auf in der horizontalen Ebene liegende Oberflächen des piezoelektrischen Sensorelements 321, 321' elektrische Polarisationsladungen auf diesen Oberflächen erzeugt werden. Und das piezoelektrische Material kann für den piezoelektrischen Transversaleffekt so orientiert in Stäbe geschnitten sein, dass unter der Wirkung der zu erfassenden Schienenbelastung B auf in der horizontalen Ebene liegende Oberflächen des piezoelektrischen Sensorelements 321, 321' elektrische Polarisationsladungen auf senkrecht zu diesen Oberflächen angeordneten Seitenflächen des piezoelektrischen Sensorelements 321, 321' erzeugt werden. Der Fachmann kann bei Kenntnis der Erfindung also eine Vorrichtung mit mehreren piezoelektrischen Sensorelementen für unterschiedliche piezoelektrische Effekte wie den piezoelektrischen Longitudinaleffekt, den piezoelektrischen Schereffekt und den piezoelektrischen Transversaleffekt realisieren.

In der Ausführungsform gemäss Fig. 2 und 3 weist der Sensor 32 zwei piezoelektrische Sensorelemente 321, 321' auf. Die Elektrode 33 ist zwischen den beiden piezoelektrischen Sensorelementen 32, 32' angeordnet. Dadurch wird die Menge der unter der Wirkung der zu erfassenden Schienenbelastung B erzeugten elektrischen Polarisationsladungen verdoppelt, was die Empfindlichkeit der Vorrichtung 3 verdoppelt. Bei Kenntnis der vorliegenden Erfindung kann der Fachmann auch einen Sensor auch mit mehr als zwei piezoelektrischen Sensorelementen realisieren.

Nur ein kleiner Teil der auf den Kopf 15 der Schiene 1 wirkenden Schienenbelastung B wirkt auch auf die Vorrichtung 3. Ein grosser Teil der auf den Kopf 15 der Schiene 1 wirkenden Schienenbelastung B wirkt vom Kopf 15 der Schiene 1 über den Steg 16 der Schiene 1 auf den Fuss 17 der Schiene 1 und vom Fuss 17 der Schiene 1 auf die Schwelle 2. Wie in Fig. 3 dargestellt, wirkt der kleine Teil der Schienenbelastung B über den Schienenkörper 10 entlang der Vertikalachse 12 auf die zwei form- und kraftschlüssigen Verbindungen im Umfangsbereich 37° der Mantelfläche 39 mit grösserer Ausdehnung auf das Sensorgehäuse 30. Vom Sensorgehäuse 30 wirkt ein noch kleinerer Teil der Schienenbelastung B entlang der Längsachse 11 über die zwei Stempel 36, 36' auf den Sensor 32 mit dem piezoelektrischen Sensorelement 321, 321`. Der noch kleinere Teil der Schienenbelastung B, welcher auf das piezoelektrische Sensorelement 321, 321' wirkt, ist proportional zur Schienenbelastung B, welche auf den Kopf 15 der Scheine 1 wirkt. Da nur ein noch kleinerer Teil der Schienenbelastung B auf das piezoelektrische Sensorelement 321, 321' wirkt, ist die Vorrichtung 3 für die Erfassung einer grossen Schienenbelastung B von bis zu 250 kN ausgelegt.

Das Belastungssignal S, S' kann über eine elektrische Leitung zu einer Auswerteeinheit übermittelt werden. Die elektrische Leitung und die Auswerteeinheit sind figürlich nicht dargestellt. Die Auswerteeinheit kann das Belastungssignal S, S' elektrisch verstärken und digitalisieren. Die Auswerteeinheit kann das Belastungssignal S, S' als Mass für die Schienenbelastung B darstellen.

Der Sensor 32 kann von den Stempeln 36, 36` unter mechanischer Vorspannung gehalten werden. Die mechanische Vorspannung spannt die in der horizontalen Ebene liegende Oberflächen vom piezoelektrischen Sensorelement 321, 321', von der Elektrode 322 und vom Sensorelementgehäuse 320 mechanisch derart gegeneinander vor, dass keine elektrisch nichtkontaktierten Bereiche mit lokalen hohen elektrischen Spannungen und elektrischen Kriechströmen auftreten. Auch spannt die mechanische Vorspannung die Oberflächen vom piezoelektrischen Sensorelement 321, 321', von der Elektrode 322 und vom Sensorelementgehäuse 320 mechanisch derart vor, dass sich Rauheiten und Unebenheiten dieser Oberflächen schliessen, was zu einer exzellenten Linearität der Vorrichtung 3 führt. Die Linearität gibt an, wie konstant die Menge der erzeugten elektrischen Polarisationsladungen mit steigender Schienenbelastung B wächst. Die Vorrichtung 3 kann eine Schienenbelastung B über einen weiten Bereich von 100 N bis 250 kN erfassen. Die mechanische Vorspannung ist über Spannmittel wie mindestens eine Schraube, ein Keil, usw. einstellbar. Die Spannmittel sind figürlich nicht dargestellt.

### Bezugszeichenliste

- 1: Schiene
- 2: Schwelle
- 3: Vorrichtung
- 10: Schienenkörper
- 11: Längsachse
- 12: Vertikalachse
- 13: Bohrung
- 130: innere Oberfläche
- 14: Querachse
- 15: Kopf
- 16: Steg
- 17: Fuss
- 30: Sensorgehäuse
- 30°: Umfangbereich mit kleinerer Ausdehnung
- 31: Hohlraum
- 32: Sensor
- 33, 33': form- und kraftschlüssige Verbindung
- 330: Linienkontakt
- 331: Flächenkontakt
- 34: Mittelpunkt
- 35: Versatzpunkt
- 36, 36': Stempel
- 37, 37': Wölbung
- 37°: Umfangbereich mit grösserer Ausdehnung
- 38: Distanz
- 39: Mantelfläche
- 320: Sensorelementgehäuse
- 321, 321': piezoelektrisches Sensorelement
- 322: Elektrode
- 323, 323': Isolationsschicht
- B: Schienenbelastung
- R13: Bohrungsradius
- R30: Gehäuseradius
- R37: Wölbungsradius
- S, S': Belastungssignal

## Patentansprüche

1. Vorrichtung (3) zur Erfassung einer Schienenbelastung (B);
welche Vorrichtung (3) in eine Bohrung (13) einer Schiene (1) einpassbar ist; auf welcher Schiene (1) Schienenfahrzeuge mit Rädern fahren, welche Räder die Schiene (1) belasten; welche Vorrichtung (3) einen Sensor (32) aufweist, welcher Sensor (32) unter einer Wirkung der Schienenbelastung (B) ein Belastungssignal (S, S') erzeugt, welches Belastungssignal (S, S') ein Mass für die Schienenbelastung (B) ist;
wobei die Vorrichtung (3) ein kreiszylinderförmiges Sensorgehäuse (30) aufweist; wobei das Sensorgehäuse (30) einen Hohlraum (31) aufweist, und wobei der Sensor (32) im Hohlraum (31) angeordnet ist;
wobei das Sensorgehäuse (30) von einer Mantelfläche (39) begrenzt ist; wobei die Mantelfläche (39) im Vergleich mit einem Bohrungsradius (R13) der Bohrung (13) in mindestens einem Umfangbereich (37°) mit grösserer Ausdehnung ein Übermass aufweist;
wobei die Vorrichtung (3) mit dem Übermass über zwei form-und kraftschlüssige Verbindungen (33, 33') im Umfangsbereich (37°) der Mantelfläche (39) mit grösserer Ausdehnung in die Bohrung (13) der Schiene (1) einpassbar ist,
**dadurch gekennzeichnet, dass**
der Sensor (32) mindestens ein piezoelektrisches Sensorelement (321, 321') aufweist, welches piezoelektrische Sensorelement (321, 321') elektrische Polarisationsladungen als Belastungssignal (S, S') erzeugt;
dass im Hohlraum (31) zwei Stempel (36, 36') entlang einer Längsachse (11) gegen einen Mittelpunkt (34) des Sensorgehäuses (30) ragen; dass die zwei Stempel (36, 36') mit dem Sensorgehäuse (30) einstückig sind; und dass die zwei Stempel (36, 36') den Sensor (32) halten; <A
dass ein kleiner Teil der Schienenbelastung (B) über einen Schienenkörper (10) entlang einer Vertikalachse (12) auf die zwei form-und kraftschlüssigen Verbindungen (33, 33') im Umfangsbereich (37°) der Mantelfläche (39) mit grösserer Ausdehnung auf das Sensorgehäuse (30) wirkt;
und dass vom Sensorgehäuse (30) ein noch kleinerer Teil der Schienenbelastung (B) entlang der Längsachse (11) über die zwei Stempel (36, 36') auf den Sensor (32) mit dem piezoelektrischen Sensorelement (321, 321 ') wirkt.

2. Vorrichtung (3) gemäss Anspruch 1, **dadurch gekennzeichnet, dass** Oberflächen des piezoelektrischen Sensorelements (321, 321') im elektrischen Kontakt mit Oberflächen einer Elektrode (322) sind; und dass die Elektrode (322) die elektrischen Polarisationsladungen als Belastungssignal (S) abgreift.

3. Vorrichtung (3) gemäss Anspruch 2, **dadurch gekennzeichnet, dass** die zwei Stempel (36, 36') das Sensorelement (321, 321') gegen die Elektrode (322) mechanisch vorspannen.

4. Vorrichtung (3) gemäss einem der Ansprüche 2 oder 3, **dadurch gekennzeichnet, dass** die Mantelfläche (39) im Umfangbereich (37°) mit grösserer Ausdehnung zwei Wölbungen (37, 37') mit einem Wölbungsradius (R37) aufweist; und dass der Wölbungsradius (R37) weitgehend weniger als die Hälfte des Bohrungsradius (R13) beträgt.

5. Vorrichtung (3) gemäss Anspruch 4, **dadurch gekennzeichnet, dass** sich der Wölbungsradius (R37) von einem Versatzpunkt (35) misst; und dass der Versatzpunkt (35) vom Mittelpunkt (34) um eine Distanz (38) versetzt ist.

6. Vorrichtung (3) gemäss einem der Ansprüche 1 bis 5, **dadurch gekennzeichnet, dass** die Mantelfläche (39) im Vergleich mit dem Bohrungsradius (R13) in mindestens einem Umfangbereich (30°) mit kleinerer Ausdehnung ein Untermass aufweist; dass die Mantelfläche (39) im Umfangbereich (30°) mit kleinerer Ausdehnung einen Gehäuseradius (R30) aufweist; und dass der Gehäuseradius (R30) kleiner als der Bohrungsradius (R13) ist.

7. Verfahren zur Montage einer Vorrichtung (3) zur Erfassung einer Schienenbelastung (B) in einer Schiene (1);
in der Schiene (1) eine Bohrung (13) mit einem Bohrungsradius (R13) angefertigt wird;
dass eine Vorrichtung (3) mit einem kreiszylinderförmiges Sensorgehäuse (30) verwendet wird, in welchem Sensorgehäuse (30) mindestens ein Sensorelement (321, 321 ') in einem Hohlraum (31) angeordnet ist, wobei das Sensorgehäuse (30) von einer Mantelfläche (39) begrenzt ist;wobei die Mantelfläche (39) im Vergleich mit einem Bohrungsradius (R13) der Bohrung (13) in mindestens einem Umfangbereich (37°) mit grösserer Ausdehnung ein Übermass aufweist;
wobei das Sensorgehäuse (30) von einer Mantelfläche (39) begrenzt ist; welche Mantelfläche (39) im Vergleich mit dem Bohrungsradius (R13) in mindestens einem Umfangbereich (37°) mit grösserer Ausdehnung ein Übermass aufweist;
und wobei die Vorrichtung (3) mit dem Übermass form- und kraftschlüssig in die Bohrung (13) eingepasst wird;
**dadurch gekennzeichnet, dass**
das Sensorelement (321, 321') ein piezoelektrisches Sensorelement (321, 321') ist, welches piezoelektrische Sensorelement (321, 321') unter einer Wirkung der Schienenbelastung (B) elektrische Polarisationsladungen als Belastungssignal (S, S') erzeugt, welches Sensorgehäuse (30) von einer Mantelfläche (39) begrenzt ist,
dass im Hohlraum (31) zwei Stempel (36, 36') entlang einer Längsachse (11) gegen einen Mittelpunkt (34) des Sensorgehäuses (30) ragen;
dass die zwei Stempel (36, 36') mit dem Sensorgehäuse (30) einstückig sind;
und dass die zwei Stempel (36, 36') den Sensor (32) halten; dass ein kleiner Teil der Schienenbelastung (B) über einen Schienenkörper (10) entlang einer Vertikalachse (12) auf die zwei form- und kraftschlüssigen Verbindungen (33, 33') im Umfangsbereich (37°) der Mantelfläche (39) mit grösserer Ausdehnung auf das Sensorgehäuse (30) wirkt; und dass vom Sensorgehäuse (30) ein noch kleinerer Teil der Schienenbelastung (B) entlang der Längsachse (11) über die zwei Stempel (36, 36') auf den Sensor (32) mit dem piezoelektrischen Sensorelement (321, 321 ') wirkt.

8. Verfahren gemäss Anspruch 7, **dadurch gekennzeichnet, dass** die Bohrung (13) mit einer Toleranz von 0.08 Millimeter gefertigt wird.

9. Verfahren gemäss Anspruch 7, **dadurch gekennzeichnet, dass** für ein endlich steifes Sensorgehäuse (30) und einen endlich steifen Schienenkörper (10) jede der zwei form- und kraftschlüssigen Verbindungen (33, 33') einen Flächenkontakt (331) bilden.

## Claims

1. A device (3) for detecting a rail load (B); which device (3) can be fitted into a bore (13) of a rail (1); on which rail (1) travel rail vehicles with wheels, said wheels exerting a load onto the rail (1); wherein said device (3) comprises a sensor (32), which sensor (32) generates a load signal (S, S') under the action of the rail load (B), said load signal (S, S') being a measure for the rail load (B);
wherein said device (3) comprises a sensor housing (30) in the shape of a circular cylinder; which sensor housing (30) comprises a cavity (31), and wherein the sensor (32) is arranged within the cavity (31);
wherein the sensor housing (30) is delimited by a lateral surface (39); said lateral surface (39) having an oversize with respect to a bore radius (R13) of the bore (13) in at least one peripheral surface area (37°) that has a larger dimension;
wherein the device (3) having said oversize can be fitted into the bore (13) of the rail (1) by two form- and force-fit connections (33, 33`) in the peripheral surface area (37°) having said larger dimension of the lateral surface (39),
**characterized in that**
the sensor (32) comprises at least one piezoelectric sensor element (321, 321'), which piezoelectric sensor element (321, 321') generates electric polarization charges serving as the load signal (S, S');
**in that** within the cavity (31) two punches (36, 36') extend along a longitudinal axis (11) towards a center (34) of the sensor housing (30); **in that** the two punches (36, 36') are made integrally with the sensor housing (30); and **in that** the two punches (36, 36') hold the sensor (32);
**in that** a small fraction of the rail load (B) acts via a rail body (10) along a vertical axis (12) onto the two form- and force-fit connections (33, 33') in the peripheral surface area (37°) having the larger dimension of the lateral surface (39) onto the sensor housing;
and **in that** an even smaller fraction of the rail load (B) acts from the sensor housing (30) along the longitudinal axis (11) via the two punches (36, 36') onto the sensor (32) that comprises the piezoelectric sensor element (321, 321').

2. The device (3) according to claim 1, **characterized in that** surfaces of the piezoelectric sensor element (321, 321') are in electrical contact with surfaces of an electrode (322); and **in that** the electrode (322) picks up the electric polarization charges as the load signal (S).

3. The device (3) according to claim 2, **characterized in that** the two punches (36, 36`) mechanically preload the sensor element (321, 321`) against the electrode (322).

4. The device (3) according to any of the claims 2 or 3, **characterized in that** the lateral surface (39) has two curvatures (37, 37`) with a radius of curvature (R37) in the peripheral surface area (37°) having the larger dimension; and **in that** the radius of curvature (R37) is substantially less than half the bore radius (R13).

5. The device (3) according to claim 4, **characterized in that** the radius of curvature (R37) is measured from an offset point (35); and **in that** the offset point (35) is offset from the center (34) by a distance (38).

6. The device (3) according to any of the claims 1 to 5, **characterized in that** the lateral surface (39) has an undersize with respect to the bore radius (R13) in at least one peripheral surface area (30°) that has a smaller dimension; **in that** the lateral surface (39) has a housing radius (R30) in the peripheral surface area (30°) having the smaller dimension; and **in that** the housing radius (R30) is smaller than the bore radius (R13).

7. A method for mounting a device (3) for detecting a rail load (B) in a rail (1);
a bore (13) having a bore radius (R13) is made in the rail (1) ;
in that a device (3) comprising a sensor housing (30) in the shape of a circular cylinder is used, in which sensor housing (30) is arranged at least one sensor element (321, 321') within a cavity (31), wherein the sensor housing (30) is delimited by a lateral surface (39); wherein said lateral surface (39) has an oversize with respect to a bore radius (R13) of the bore (13) in at least one peripheral surface area (37°) that has a larger dimension;
wherein said sensor housing (30) is delimited by a lateral surface (39); which lateral surface (39) has an oversize with respect to the bore radius (R13) in at least one peripheral surface area (37°) that has a larger dimension;
and wherein the device (3) having said oversize is fitted into the bore (13) in a form- and force-fit manner;
**characterized in that**
said sensor element (321, 321') is a piezoelectric sensor element (321, 321'), which piezoelectric sensor element (321, 321') generates electric polarization charges serving as the load signal (S, S') under an action of the rail load (B), which sensor housing (30) is delimited by a lateral surface (39),
**in that** within the cavity (31) two punches (36, 36') extend along a longitudinal axis (11) towards a center (34) of the sensor housing (30);
**in that** the two punches (36, 36') are made integrally with the sensor housing (30);
and **in that** the two punches (36, 36') hold the sensor (32); **in that** a small fraction of the rail load (B) acts via a rail body (10) along a vertical axis (12) onto the two form- and force-fit connections (33, 33') in the peripheral surface area (37°) of the lateral surface (39) having the larger dimension onto the sensor housing; and **in that** an even smaller fraction of the rail load (B) acts from the sensor housing (30) along the longitudinal axis (11) via the two punches (36, 36') onto the sensor (32) that comprises the piezoelectric sensor element (321, 321').

8. The method according to claim 7, **characterized in that** the bore (13) is fabricated with a tolerance of 0.08 millimeters.

9. The method according to claim 7, **characterized in that** for a sensor housing (30) having a finite rigidity and a rail body (10) having a finite rigidity each of the two form- and force-fit connections (33, 33') forms a surface contact (331).

## Revendications

1. Dispositif (3) pour détecter une charge ferroviaire (B) ; lequel dispositif (3) peut être monté dans un alésage (13) d'un rail (1) ; dans lequel sur ce rail (1) circulent des véhicules ferroviaires ayant des roues, lesdites roues exerçant une charge sur le rail (1) ; dans lequel ledit dispositif (3) comprend un capteur (32), lequel capteur (32) génère un signal de charge (S, S') sous l'action de la charge ferroviaire (B), lequel signal de charge (S, S') est une mesure de la charge ferroviaire (B) ;
dans lequel ledit dispositif (3) comprend un boîtier de capteur (30) en forme de cylindre circulaire ; lequel boîtier de capteur (30) comprend une cavité (31), et dans lequel ledit capteur (32) est disposé à l'intérieur de la cavité (31) ;
dans lequel le boîtier de capteur (30) est délimité par une surface latérale (39) ; ladite surface latérale (39) présente une surdimension par rapport au rayon de l'alésage (R13) de l'alésage (13) dans au moins une zone de surface périphérique (37°) qui a une dimension supérieure ;
dans lequel le dispositif (3) ayant cette surdimension peut être monté dans l'alésage (13) du rail (1) par deux liaisons de forme et de force (33, 33') dans la zone de surface périphérique (37°) de la surface latérale (39) ayant la dimension supérieure,
**caractérisé en ce que**
ledit capteur (32) comprend au moins un élément de capteur piézoélectrique (321, 321'), lequel élément de capteur piézoélectrique (321, 321') génère des charges de polarisation électrique servant de signal de charge (S, S') ;
**en ce que** dans ladite cavité (31), deux poinçons (36, 36') s'étendent le long d'un axe longitudinal (11) vers un centre (34) du boîtier de capteur (30) ; lesdits deux poinçons (36, 36') sont solidaires du boîtier de capteur (30) ; et **en ce que** les deux poinçons (36, 36') soutiennent le capteur (32) ;
**en ce qu'**une petite fraction de la charge ferroviaire (B) agit par l'intermédiaire d'un corps de rail (10) le long d'un axe vertical (12) sur les deux liaisons de forme et de force (33, 33') dans la zone de surface périphérique (37°) de la surface latérale (39) ayant la dimension supérieure sur le boîtier de capteur ;
et **en ce qu'**une fraction encore plus petite de la charge ferroviaire (B) agit depuis le boîtier de capteur (30) par l'intermédiaire des deux poinçons (36, 36') le long de l'axe longitudinal (11) sur le capteur (32) comprenant l'élément de capteur piézoélectrique (321, 321').

2. Dispositif (3) selon la revendication 1, **caractérisé en ce que** les surfaces de l'élément capteur piézoélectrique (321, 321') sont en contact électrique avec les surfaces d'une électrode (322) ; et **en ce que** l'électrode (322) capte les charges de polarisation électrique en tant que signal de charge (S).

3. Dispositif (3) selon la revendication 2, **caractérisé en ce que** les deux poinçons (36, 36') préchargent mécaniquement l'élément capteur (321, 321') contre l'électrode (322).

4. Dispositif (3) selon l'une quelconque des revendications 2 ou 3, **caractérisé en ce que** la surface latérale (39) comporte deux courbures (37, 37') ayant un rayon de courbure (R37) dans la zone de surface périphérique (37°) ayant la dimension supérieure ; et **en ce que** le rayon de courbure (R37) est sensiblement inférieur à la moitié du rayon de l'alésage (R13).

5. Dispositif (3) selon la revendication 4, **caractérisé en ce que** le rayon de courbure (R37) est mesuré à partir d'un point de décalage (35) ; et **en ce que** ledit point de décalage (35) est décalé du centre (34) d'une distance (38).

6. Dispositif (3) selon l'une quelconque des revendications 1 à 5, **caractérisé en ce que** la surface latérale (39) présente une sousdimension par rapport au rayon de l'alésage (R13) dans au moins une zone de surface périphérique (30°) qui a une dimension inférieure ; **en ce que** la surface latérale (39) présente un rayon de boîtier (R30) dans la zone de surface périphérique (30°) ayant la dimension inférieure ; et **en ce que** le rayon de boîtier (R30) est inférieur au rayon de l'alésage (R13).

7. Procédé pour monter un dispositif (3) de détection d'une charge ferroviaire (B) dans un rail (1) ;
un alésage (13) ayant un rayon d'alésage (R13) est réalisé dans le rail (1) ;
en ce qu'un dispositif (3) ayant un boîtier de capteur (30) en forme de cylindre circulaire est utilisé, dans lequel boîtier de capteur (30) est disposé au moins un élément de capteur (321, 321') à l'intérieur d'une cavité (31), lequel boîtier de capteur (30) est délimité par une surface latérale (39) ; ladite surface latérale (39) ayant une surdimension par rapport à un rayon d'alésage (R13) de l'alésage (13) dans au moins une zone de surface périphérique (37°) avec une dimension supérieure ;
dans lequel ledit boîtier de capteur (30) est délimité par une surface latérale (39) ; laquelle surface latérale (39) est surdimensionnée par rapport au rayon de l'alésage (R13) dans au moins une zone de surface périphérique (37°) qui a une dimension supérieure ;
et dans lequel ledit dispositif (3) ayant la surdimension est monté dans l'alésage (13) par une liaison de forme et de force ;
**caractérisé en ce que**
ledit élément capteur (321, 321') est un élément capteur piézoélectrique (321, 321') et sous l'action de la charge ferroviaire (B) lequel élément capteur piézoélectrique (321, 321') génère des charges de polarisation électrique servant de signal de charge (S, S'), lequel boîtier de capteur (30) est délimité par une surface latérale (39),
**en ce que** dans la cavité (31), deux poinçons (36, 36') s'étendent le long d'un axe longitudinal (11) vers un centre (34) du boîtier de capteur (30) ;
**en ce que** les deux poinçons (36, 36') sont fabriqués intégralement avec le boîtier de capteur (30) ;
et **en ce que** les deux poinçons (36, 36') soutiennent le capteur (32) ; **en ce qu'**une petite fraction de la charge ferroviaire (B) agit par l'intermédiaire d'un corps de rail (10) le long d'un axe vertical (12) sur les deux liaisons de forme et de force (33, 33') dans la zone de surface périphérique (37°) de la surface latérale (39) ayant la dimension supérieur sur le boîtier de capteur ; et **en ce qu'**une fraction encore plus petite de la charge ferroviaire (B) agit depuis le boîtier de capteur (30) le long de l'axe longitudinal (11) par l'intermédiaire des deux poinçons (36, 36') sur le capteur (32) comprenant l'élément de capteur piézoélectrique (321, 321').

8. Procédé selon la revendication 7, **caractérisé en ce que** l'alésage (13) est fabriqué avec une tolérance de 0,08 millimètre.

9. Procédé selon la revendication 7, **caractérisé en ce que** pour un boîtier de capteur (30) ayant une rigidité finie et un corps de rail (10) ayant une rigidité finie, chacune des deux liaisons de forme et de force (33, 33') forme un contact de surface (331).
